# EUROPEAN PATENT APPLICATION

(11) **EP 4 206 623 A1**
(43) Date of publication of application: **05.07.2023**
(21) Application number: 22150009.3
(22) Date of filing: 03.01.2022
(51) Int. Cl.: G01H 3/12, G01N 33/00, H04L 67/01

(54) **EVENT MEASURING AND/OR MONITORING DEVICE, SYSTEM AND METHOD**

(71) Applicant: Orbiwise SA, 1228 Plan-Les-Ouates (CH)
(72) Inventor: THOMSEN, Peter Kaae, 1292 Chambésy (DK); MORTENSEN, Jørgen, 1202 Geneva (DK); HELAL, Didier, 74160 Saint-Julien en Genevois (DK)
(74) Representative: KATZAROV S.A.

(57) **Abstract**

The present invention relates to an event measuring and/or monitoring device comprising a sensing unit adapted to sense an event and generate data representative of said event, a data processing unit adapted to process said data representative of said event so as to generate processed data, a communication module adapted to send said processed signal to a gateway through LPWA radio technology, a control module adapted to control the communication module so as to trigger a communication process according to a predetermined protocol, an energy source adapted to provide energy to the units of said event measuring and/or monitoring device.

## Description

### Technical Field

The present invention relates to a device, to a system and to a method for measuring and/or monitoring an event. More particularly, the invention relates to an autonomous device, an autonomous system and to a method for continuously measuring and/or monitoring an event and analyzing the same in real time.

### Background of the art

Nowadays, as more people move to urban areas, pollution has become a major problem for society. Typical sources of pollution are chosen within the group of noise pollution, air pollution, security, traffic pollution and the like. Examples of noise pollution are transport, such as road, rail and air traffic, construction and industry, radios and televisions blaring in shops, restaurants and bars. Any type of pollution and especially noise pollution have broad effects on health and the economy, impacting a significant portion of the population.

In addition to urban noise pollution, the United States Center for Disease Control (CDC), for example, estimates that 22 million workers in the USA are exposed to potentially damaging noise at work each year. Indeed, whether one work at a sports venue, on a tarmac, or operate a jackhammer, noise pollution can also cause hearing loss among other consequences. In Europe, a directive recites that the employer shall assess and, if necessary, measure the levels of exposure to noise to which workers are exposed. Carrying out the risk assessment, the employer must give particular attention to level, type and duration of exposure, exposure limit / action values, health effects spreading from particular sensitivity of the worker, interactions with other risks (ototoxic substances, vibrations), the exposure to noise beyond normal working hours under his responsibility, and noise caused by warning signals at work.

The risks arising from exposure to noise shall be eliminated or reduced to a minimum. The reduction of risks arising from exposure to noise shall be carried out by working methods or equipment that require less exposure to noise, instructions on the correct use of equipment, technical measures (shield, noise absorbing coverings) or organizational measures in order to reduce duration and intensity of exposure.

The health impacts of environmental and industrial noise are a growing concern. Recent data from the European Environment Agency (EEA) have demonstrated that more than 100 million European citizens are affected by high noise levels negatively impacting human health. These impacts increase the risk of heart disease, stroke, diabetes, sleep disturbance, stress and cognitive impairment of children, it is a major concern for governments and health associations. This fact becomes even more dramatic when, as of 2012, 1M healthy life-years in Western Europe were being lost annually due to environmental noise.

From the economic point of view, the cost of noise-related health issues in Europe is estimated between 0.3-0.4% of GDP. Studies in Europe also demonstrate the relationship between environmental noise and real estate markets, with housing prices falling as much as 2% per decibel (dB) of noise increase. Furthermore, builders, families and governments need to incur extraordinary expenses in order to isolate buildings, roads and other civil infrastructures from noise (the global acoustic insulation market was worth €8.5 billion in 2015).

Thus, effective pollution mitigation, and more particularly noise pollution mitigation, is in the interest of private business and public citizens, with the promise of a better quality of life and economic benefits. Indeed, governments are passing many measures to reduce the impact of noise pollution at local, regional, national and supranational scale. Among them, the EU 7th Environmental Action Program is especially ambitious, as it requires EU cities with more than 100,000 inhabitants to publish noise maps and noise management plans. The goal of the program was to *"ensure that by 2020 noise pollution in the European Union has significantly decreased, moving closer to WHO recommended levels".* The first action area is to determine city exposure to environmental noise, with EU directive 2002/49/EC stipulating noise indicators and making noise mapping mandatory for mid-size cities and up.

This information is vital to understand the overall noise pollution in the city and in industrial sites, and its real-time capability enables valuable input to other important services in the city, such as dynamic traffic control systems (ITS).

In order to achieve this objective, noise monitoring devices and methods have been investigated to improve the noise pollution management both in urban environment and in industrial settings to limit the "occupational noise".

Currently, noise monitoring in cities and industrial sites is based on inaccurate, manual measurements employing expensive equipment. Besides requiring significant human labor, this approach disregards the dynamic spatial and temporal variability of noise pollution in a city or a site (dynamics and evolution of noise within hours, days, months or even during specific events). The information gathered with this approach is always lacking and incomplete, resulting in inaccurate probabilistic models.

There is therefore a need for a large-scale deployment of noise pollution monitoring in order to act against the massive health problems and economic losses that noise causes to society.

Still, the reality is that cities face serious challenges to comply with the European directive. This is because available solutions for noise monitoring (mostly using portable sound level meters) are based on manual, sequential sampling of noise at different locations of a city, which presents several drawbacks.

One of them is that generating noise maps requires a very long time and no real-time noise information is available to help managing noise levels: it is basically impossible, with current methods, to measure in multiple locations simultaneously, with the whole process requiring up to 5 years, making decisions on noise management very difficult and poorly based on actual facts.

Another drawback is the high cost of ownership. Manual, sequential sampling of noise requires human-intensive work and expensive, high-resolution equipment. Thus, the deployment of large-scale sensor networks to adequately characterize noise pollution in cities becomes completely unaffordable. Furthermore, the noise level measurements have to be processed and properly analyzed to extract meaningful information, requiring extra time and cost.

Finally, the current techniques require manual consolidation of all gathered data and extensive data extrapolation to build approximate noise maps for a city.

There is therefore a need for a device, for a system and for a method for measuring and/or monitoring an event, preferably a noise, which overcomes the above issues, in both urban and industrial environments.

In this regard, a primary object of the invention is to provide a device, a system and a method permitting measuring and/or monitoring an event, preferably noise, in an urban environment or an industrial site in real time and in a continuous manner.

Another object of the invention it to provide a device, a system and a method permitting measuring and/or monitoring an event, preferably noise, in a low power and/or self-energy harvesting manner so as to be able to function autonomously during a long period of time without human interaction.

A further object of the invention it to provide a device, a system and a method permitting measuring and/or monitoring an event, preferably noise, with a long-range communication technology so as to be able to cover wide areas inexpensively.

A further object of the invention it to provide a device, a system and a method permitting measuring and/or monitoring an event, preferably noise, capable of generating an event-related, such as noise, map.

A further object of the invention it to provide a device, a system and a method permitting measuring and/or monitoring an event, preferably noise, capable of identifying the type of an event when it occurs, such as a gunshot, an explosion, a car accident or a hazardous gas leakage and the like.

A further object of the invention it to provide a device, a system and a method permitting measuring and/or monitoring an event, preferably noise, capable of localizing an event when it occurs, such as a gunshot, an explosion, a car incident or a hazardous gas leakage and the like.

### Summary of the invention

The above problems are solved by the present invention which comprises cost-effective devices measuring an event, preferably noise, across an area of interest, said area being in an urban environment or an industrial site, or the same. The devices are small, light, battery-powered and energy-efficient, so they can be installed on any available urban structure, such as light poles, house walls, etc. and perform autonomously for an extended period of time.

The data gathered is sent in real time through low-power, long-range radio links to a Cloud Server, which processes these noise level measurements to automatically generate high quality, real-time noise pollution reports covering large geographical areas.

The present invention therefore relates to a solution which permits a real-time connectivity of the whole system by using Low-Power Wide-Area Network (LPWAN) technology, which require few base stations / gateways to cover large geographical areas, thereby enabling low-cost loT network deployments. Although the present invention can operate on several LPWA standards, the initial development was using the LoRaWAN protocol standard. As a result, the present invention generates highly accurate and continuous noise pollution maps, affordably and quickly. Further, it includes export APIs to make the real-time data available for other, external Smart City management tools.

The present invention also comprises a computer implemented method comprising an analytics section permitting customers to quickly develop their own applications.

The present invention has the following advantages:
It permits to build a full event/noise map for a city within minutes, preferably ranging from 1 to 15 minutes, far surpassing the requirements of current regulations and providing an actual tool for taking corrective actions for noise-related problems immediately.

It represents the most accurate and comprehensive way to measure noise pollution, because it continuously samples noise in many locations for a long period of time. This becomes especially relevant when considering that noise can dramatically vary over time and space in a city.

It delivers a cost-effective solution to cover a full metropolitan area, leveraging both the characteristics of the devices and of the LPWA radio technologies used for their communication with the network.

It is a fully-automated operation with zero-maintenance cost, as a strong differentiator with prior art solutions, especially expanding the device autonomy up to 5 years, avoiding intensive human intervention, as an eventual source of delays, errors and additional cost.

It provides a full end-to-end solution that solves the problem of lengthy data analysis and report generation routine, not only consolidating noise level measurements from sensors but enabling data analytics in real time (with intensive data collection from the sensor network) and delivering valuable insights and real-time dashboards. Additionally, the present invention offers an interface to external applications using common standards (e.g. ArcGIS and HTTPS REST API) to enable other Smart City applications to take advantage of all real- time noise measurements. This allows users to reduce complexity of noise measurement installations at the time they can directly get the desired measurements in an easy-to-understand interface.

A first aspect of the invention is an event measuring and/or monitoring device, preferably a noise measuring and/or monitoring device, comprising a sensing unit adapted to sense an event and generate data representative of said event, a data processing unit adapted to process said data representative of said event so as to generate processed data, a communication module adapted to send said processed signal to a gateway through LPWA radio technology, a control module adapted to control the communication module so as to trigger a communication process according to a predetermined communication protocol, an energy source adapted to provide energy to the units of said event measuring and/or monitoring device.

Preferably, the generated data representative of said event are statistical information of the measured noise preferably taken from the group comprising peak value in a given period, level exceeded for 90% of the time in a given period and the like. This permits to lower the energy consumption incurred to process and transmit data.

According to a preferred embodiment of the present invention, the sensing module comprises at least one of a microphone, a temperature sensor, an air quality parameters (Co2, N2, CO, etc...) sensing device, a humidity sensor, an accelerometer, a gyroscope and a pressure sensor.

Advantageously, the communication module adapted to send said processed signal uses at least one of LoRaWAN, NB-IoT, SigFox, LTE-M and Ingenu RPMA radio technology.

Preferably, the sensing module functions continuously.

According to a preferred embodiment of the present invention, the event detection device further comprises a localization module.

Advantageously, the energy source comprises at least one of a battery, piezoelectric transducer and solar cells.

According to a preferred embodiment of the present invention, the control module is adapted to control the communication system so as to periodically send the processed signal at intervals.

Preferably, the event detection device comprises at least one volatile memory adapted to temporarily store statistical information the processed signal data and/or audio waveform before being sent.

Advantageously, the control module is adapted to control the communication system so as to immediately send a processed signal when the sensing module detects an event whose properties meet a predetermined condition.

Preferably, the sensing module is at least one microphone such that it is adapted to measure and monitor an environmental noise by detecting a sound.

According to a preferred embodiment of the present invention, the processing module is adapted to transform the detected data at the sensing module into a signal representing statistical properties of the event signal being received by the sensing unit.

Advantageously, the event detection device further contains at least one memory adapted to temporarily store the processed data said memory being erased at (regular) intervals after transmission of a signal by said communication module.

A second aspect of the invention is an event detection system comprising a plurality of event detection devices of the first aspect distributed at predetermined location in an urban environment and at least one gateway adapted to receive signals from said event detection devices.

According to a preferred embodiment of the present invention, the timing of the event detection devices is synchronized.

A third aspect of the invention is an event detection method carried out by the event detection system of the second aspect of the invention, characterized in that it comprises the steps of continuously sensing an event and generating data representative of said event, preferably statistical information of the measured noise preferably taken from the group comprising peak value in a given period, level exceeded for 90% of the time in a given period and the same, processing said data representative of said event so as to generate processed data, temporarily storing said processed data and periodically sending said processed data to a remote analytical application.

The particular advantages of this device of the invention being similar to the ones of the method of the first aspect of the invention, they will not be repeated here.

### Brief description of the drawings

Further particular advantages and features of the invention will become more apparent from the following non-limitative description of at least one embodiment of the invention which will refer to the accompanying drawings, wherein
- Figure 1 represents a preferred embodiment of the present invention as well as its different sections;
- Figure 2 represents the Noise Application Architecture of the present invention;
- Figure 3 schematically represent an array of event measuring and/or monitoring device according to an embodiment of the present invention capable of localizing an event;

### Detailed description of the invention

The present detailed description is intended to illustrate the invention in a non-limitative manner since any feature of an embodiment may be combined with any other feature of a different embodiment in an advantageous manner.

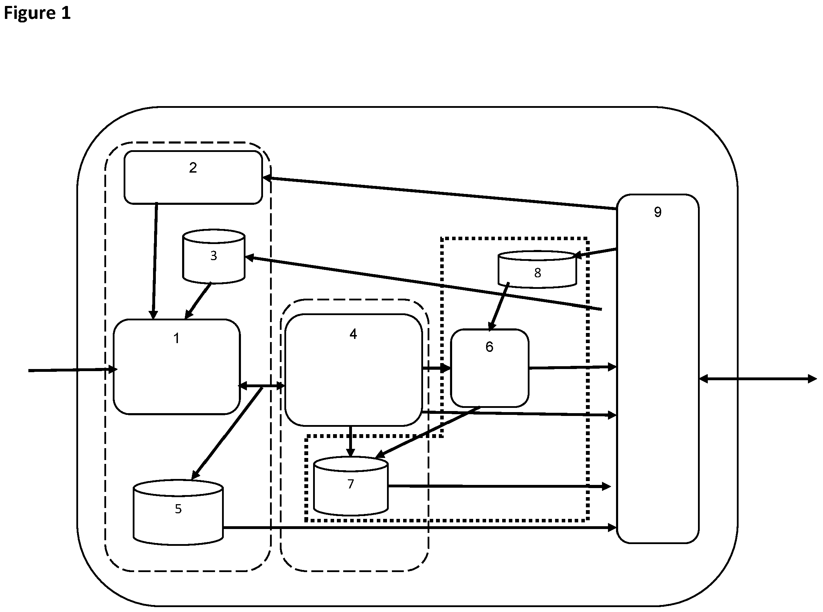

Figure 1A shows the first aspect of the invention which is an event measuring and/or monitoring device 100. It has to be understood that the terms measuring and/or monitoring have their usual meaning i.e. measure the signal received by an event and monitoring the same during a certain period of time but also implicitly means detecting said event in order to be measure its features and monitor it.

The event measuring and/or monitoring device 100 of the present invention preferably comprises three sub-sections i.e. a measuring section 11, a data processing section 12 and a data communication section 13. As a preferable embodiment, a fourth section can be optionally added which is an event detection section 14.

In Figure 1 one can see a preferable embodiment of the present invention where the event measuring and/or monitoring device 100 preferably comprises an environment sensing unit 1, a clock and time synchronization unit 2, a measurement configuration and schedule unit 3, a data processing and feature extraction unit 4 configured to extract and process features such as SPL, Spectrum and sound fingerprint, a temporary recording memory 5, an event detection engine 6, a persistent recording memory 7 configured to persistently store the measured features and events, a control unit 8 (rules, threshold, fingerprints), a (wireless) bidirectional data communication unit 9 and an energy source (not represented).

As mentioned above, the device can be separated in a measuring section 11, a data processing section 12 and a data communication section 13 and a fourth section can be optionally added which is the event detection section 14.

Figure 1 schematically represents the measuring section 11.

It comprises hardware components for measuring physical, and possibly chemical, parameters in the environments. Therefore, it comprises an environment sensing unit 1 configured to sense at least one of a sound, a temperature, a humidity, a pressure, an air quality and the like. Preferably, the environment sensing unit 1 is a smart sensor capable of carrying loT protocols. More preferably, the environment sensing unit 1 is a microphone or a smart microphone being able to capture sound noise, preferably in the range of 30 dB to 120 dB SPL.

When a plurality of these devices 100 is used, it can be important that these devices 100 are synchronized. Therefore, in order to synchronize the different devices 100 together with q gateway as well as among them, they preferably comprise a clock and time synchronization unit 2 such that the measurements are timed / synchronized to the clock system and to other devices. This is particularly interesting when one wishes to localize the event as explained below. Preferably, the clock and time synchronization unit 2 are synchronized to an external precise clock by at least one of commands from the network, feedback when measured from the RF communication (when communication was done) and GNSS.

Also, this section preferably comprises a non-volatile memory 3 configured to store the configuration and schedule data adapted to guide/control the sensing unit 1 into how and when to measure as well as to store the sensed signal when an event is measured. Configuration and schedule are sent preferably by the user or the noise monitoring application (the NoiseApp) to the device via the (wireless) data connection. The configuration and schedule data which control the sensing unit 1 should preferably permit to reduce the overall power consumption of the device100 and therefore improve the battery life of the device 100. This can be done, for example, by predicting the best measurement period depending on specific conditions such as peak traffic hours, weather, week days and the like, and then by scheduling measurements during these periods at specific, preferably regular, intervals such as each 15 minutes. The intervals preferably depend on particular parameters such as the time, the date, the weather and the like.

In the preferred embodiment, no portion of the entire audio waveform, but only some statistical information of the measured noise, such as peak value in a given period, level exceeded for 90% of the time in a given period etc. are stored in the nonvolatile memory. This approach has the benefit of reducing memory requirements and, also, circumvent any issues around privacy, etc.

However, in the embodiment including sound detection (using the event detection engine 14, see below) it should preferably additionally include a RAM memory 5 to temporarily store a portion of the actual audio waveform in the device.

Once measured, the measured data is then sent to a post-processing step in the data processing section 12 and a copy is also stored in a RAM / volatile memory 7, for later use, if needed such as if a detected event requires it.

Once sent to the data processing section 12, which is illustrated in figure 1, the data processing and feature extraction unit 4 extracts the key features of the sampled data such as the level (SPL), spectrum and/or statistical data. Then, these extracted features are sent to different units:
1) the event detection unit 6, which is optional and can identify certain type of event and attribute them to some specific categories (accident, gunshot, and the like)
2) the Noise application (NoiseApp) via the data communication unit 9, preferably at predetermined intervals depending od particular parameters such as the time, the date, the weather and the like, and
3) a persistent memory 7 where they are stored for later retrieval since the noise application can request to have data (re) transmitted from the local storage in case of failure or the same.

The event detection engine 14, illustrated in figure 1, is configured to receive and analyze the extracted data and to determine that a particular event or sound, such as a gunshot, has occurred based on the comparison of the extracted data with predetermined parameters.

More particularly, when received by the event detection unit 6, the extracted data are analyzed and used to determine if an event, such as a visual or acoustic alarm, should be generated, by comparing the extracted data with configured rules, thresholds and/or fingerprints which are stored in a memory 8. If the event detection process shows that an event necessitating an alarm has occurred, no matter when the next interval of communication is, the alarm message is sent via the communication unit 9. More particularly, the event detection process can be based on simple level comparison, on sound profile comparison, but also on a more sophisticated detection process which can be made e.g., based on AI technologies like rule based, neural network which has previously been trained to recognize a particular sound type, or statistical models.

An example of AI implementation could consist in identifying a particular situation in a particular zone such an air quality pollution problem, such as a gas leak, which could be recognized thanks to machine learning, and therefore generate an alarm to solve the issue before an explosion. In the same manner, an acoustic event detection system could identify human voices and their fingerprint to identify possible fighting issues or worse in advanced.

If the event detection engine 14 determines that the received data, representative of a measured physical property correspond to a detected event which should generate an alarm, it is transmitted immediately through the data communication module 9 to the Noise application.

As examples, cases of basic alarms/alerts for noise management, one can have a device deployed in a city which detects a high noise level (e.g. L90>85dBA) during the night at 3am.

As the application is preferably connected to the security applications used by the city, in this case, when a noise event is detected, an alarm can be sent to Police which will send a patrol to check what is going on in the area. Alternatively, when a device detects a very loud noise level (e.g. >100dBA) in an industrial deployment, immediately, without waiting for the completion of the measurement period, the device can activate the LPWA radio and send an uplink message to Noise Application and the maintenance crew is dispatched to the area to find that an accident has taken place and provides first aid to employees who were injured in the accident.

Finally, event detection data are also stored locally in a persistent memory 7, for possible later retrieval by the application over the data connection.

The last section is the data communication unit 9 which is preferably a wireless data communication unit capable to communicate and transmit data between the device and the user, preferably via the noise application, preferably via a gateway. The communication can be carried out through many different standards including LPWA such as LoRaWAN, SigFox, DECT 2020; Cellular such as NB-loT and LTE-M; and connectivity such as BT, Wi-Fi etc.

The preferred communication technology remains the low-power long-range radiotechnology since it permits a drastically reduced energy consumption.

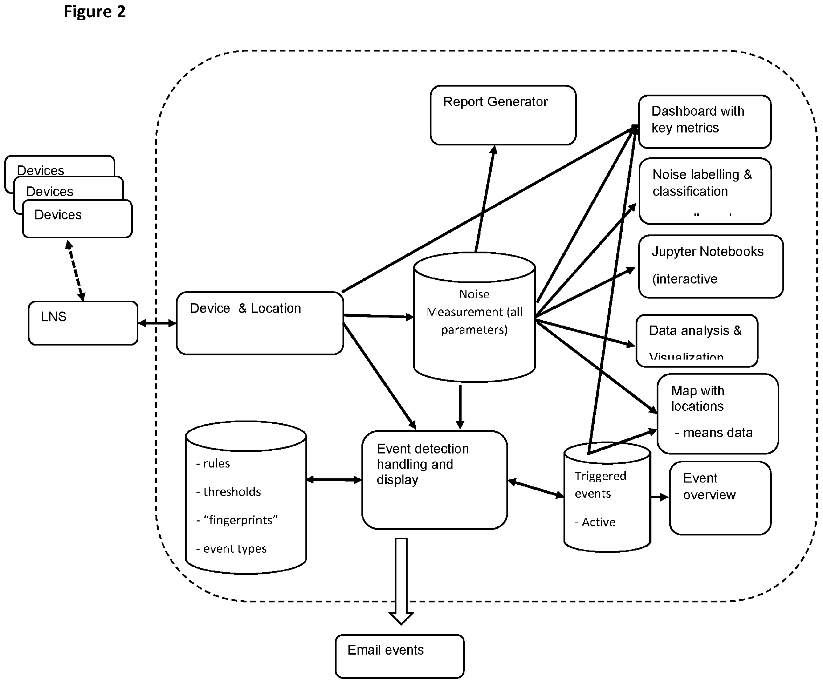

Figure 2 represents a second aspect of the invention which is the architecture of the noise application. What is called "Noise application" here is a computer implemented method which is adapted to receive the signal from the device, where the signal preferably represents statistics of an event a mentioned above and process this signal to transform it in usable data.

The noise application is preferably installed in a remote computer or a cloud environment and communicates with the noise measuring and/or monitoring device via a LoRaWAN Network server (LNS).

The signals are received in the NoiseApp by an input module whose function is to decode and encode the incoming messages from each noise measuring and/or monitoring device in the system and then associate the (geographical) location to each incoming measurement. In order to do so, the measurements are forwarded to a storing unit and a processing engine creating and editing location metadata, device association and group location with tags, to refer to a group of locations with a single name or tag.

As mentioned above, the NoiseApp can generate messages based on the measured noise data, such as a warning or an alarm that a very high noise level is measured by a device or a specific noise pattern is detected.

More particularly, when a message is triggered, the user is immediately informed, for example by displaying it in an event table and on a dashboard, by an Email or webhook sent to subscribed users, both including the type of event which has generated the message, data measured etc. In order to keep a history of the messages, they are stored for later usage and the users can get a memo about them.

The messages are triggered by configurable rules which can compare measurements data with configurable thresholds or "fingerprints" of noise measurements and trigger events if its conditions are meet. The rules can use measurement data from multiple locations, can be run each time a new measurement is done or periodically and can be created in a user friendly rule-editor or in advanced mode with a sandboxed Python script.

The NoiseApp preferably stores all measurements from all noise measuring/monitoring devices and all locations, including past years measurements Noise parameters, device status and location coordinates. All these data can be used for further analysis, later playback and e.g., for alarm event threshold settings in case of machine learning. It is also adapted to store all event generated.

Thanks to the incoming signals sent by al the devices, the Noise Application is adapted to determine and/or generate a plurality of technical data including :
Data Analysis and visualization consisting in the display of any noise parameters over time, filtered by e.g. location, tag, the calculation of various noise metrics e.g. depending on day/night summarized over e.g. week, the evaluation of new thresholds from past data (to optimize event/rules, and the like.

Noise Map generation where locations are shown on maps, with coded noise level and locations with unusual high noise are highlighted with concentric circles configurable vs level, also showing playback of old noise levels/ colour on map.

Event overview display showing a list of all events sorted and filtered e.g. per tag or location, adding memo to events and closing events.

Dashboard for overview of current noise level and status showing noise level vs previous days noise levels and reset events.

Noise labelling and classification consisting in an analysis and labelling / classification of noise segments for further analysis , exclusion etc, tools for manual and automatic classification and labelling.

Jupyter notebook for advanced interactive noise analysis involving Jupyter Python environment with access to all noise data for custom, interactive noise analysis and visualization

Generation of Configurable off-line generated reports, graphs and tables for e.g., monthly noise level and events

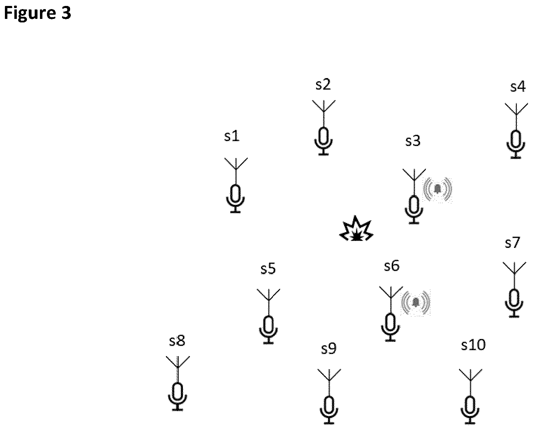

Figures 3 shows a particular embodiment of the invention where several devices of the present invention are provided in a group such that the system of the present invention is capable of noise sensor-based audio event and location detection.

This embodiment comprises a system and a method using distributed low-power devices of the present invention to estimate the location of a noise event.

The used device are preferably the ones mentioned above which comprise very low-power sensors, powered by either a battery or energy harvesting methods, and with an operating life of several years without maintenance.

According to this aspect of the invention, the devices perform continuous sampling of the surrounding audio, however, they neither have sufficient energy to neither perform advanced processing in the sensor, nor to transmit the samples back to the central server. The sensors power budget only allows to transmit small block of noise statistics calculated in the data processing section of the device on the noise and transmitted at a period, such as e.g., every 15 minutes.

When an event in the environment happens that generates a loud noise, this noise is detected on one or more of the event measuring/monitoring devices and an event detection algorithm in the device permits to flag this event (e.g., sensor s3 and s6 in figure 3).

Once the event has been detected in a device, the sensor immediately sends a notification to the application. At this moment the location of the event is not known, and the event may likely be a false detection.

Once the server receives the notification, the server immediately notifies all the surrounding devices to store the audio samples for this last period for potentially further processing. This way the data for these sensors call be recovered later for non-real-time processing.

The devices that detected the event then transmit more information about the event, which can be either raw samples, or some parametric description of the samples.

The server analyses these samples using a particular algorithm different than the simple event detector in the devices, to determine if this is a false detection or a real event of concern.

If the server determines that this is a true event of concern, the server will request each of the surrounding sensors to deliver their raw data. Once the server has received the data for each of the surrounding sensors, the server analyzes the data from the several devices with known locations, and perform a location estimate by performing a cross-correlation between the data from all devices and determine the relative ToA (Time-of-Arrival) of the sound event and finally estimate the location by multilateration.

As mentioned above, the devices in question are based on a low power microphone running continues samples into a microcontroller. The microcontroller continuously stores the data into a RAM based circular buffer, with sufficiently large sampling depth to accommodate the system roundtrip delay from sending a message from one device, until the server can notify all surrounding devices.

The device is preferably using LPWA radio technology and in particular LoraWAN in class B mode. In this case the max delay for a download from the server is ∼8seconds. So a typical buffer depth must be deep enough to hold around 10 seconds of data. The sample data are stored in internal RAM which has only negligible power consumption impact.

When the event is detected and the server notify all surrounding devices to store the data, the device copies the content of the RAM into an associated FLASH memory (typically externally to the MCU). This FLASH is large enough to hold several of these events. Previous old, stored event can be automatically deleted as space runs out.

After storing the event samples in the FLASH, the device can on request start to transmit the data back to the server for post processing of the location.

To be able to calculate the relative arrival time of the event on each sensor, the timing of all the sensors must be accurately (to around few milliseconds) synchronized. The synchronization is performed using the radio interface. The sensor will request the absolution time from the server and when connected to GPS timed gateways / base stations, the sensor is able to obtain precise time synchronization.

Clock drift in the sensor can be monitored on the server by monitoring the drift in uplink time vs the expected time for the periodic uplinks from the sensor.

As the sensor is time synchronized to absolute time (+/- the clock drift), the server can ask, when requesting data for an event, the exact time interval of data to send. The amount of needed data can be calculated on the server side and is dependent on the relative spacing between the sensors.

For example, when the event is detected on sensor s3, the server will ask sensor s1 to send its data. As the distance between sensor s3 and s1 is e.g., 300m, and the speed of sound is -340m/s, the data will arrive within about +/- 1 second before or later on sensor s1 than sensor s3. This means the sensor only needs to send about 2 seconds of data around the absolute event detection time Aldo, one can send some additional sound data to take into account sounds reflections and diffraction phenomena.

As the sensor is using LPWA technology, uplink (and downlink) is a scarce resource and sending several seconds of uncompressed audio data at e.g., 20kHz may be impractical. The optional optimizations that can be employed are:
Assuming event is still detectable on a lower data rate or performing cross correlation in the device: upon receiving the event, the server extracts the event data, and send them via multicast to the devices that will then perform the correlation.

The mechanism described to estimate the location of an event (i.e., a noise level transition) can also be used to estimate the location of a continuous dominant noise source, provided that the dominant noise source is sufficiently a-periodic to be able to use cross correlation to estimate the absolute phase difference due to the difference in ToA.

Also, an event rejected as false detection may be manually reviewed by the operator. I.e., the operator may request the full raw sample from the sensors that detected the event and listen to the event. As the samples around the event are stored in memories on the relevant sensors the operator may get more data from any of the sensors to listen to it and may finally decide to act on the event and have the system perform the location estimation.

As long as false detections have not exhausted the memory on the devices, this decision can be taken up to several hours or days after the actual event.

As an example, one can have a device(s) installed in a refinery measure 65dBA average noise, mostly due to refinery equipment. Suddenly, average noise detected goes up significantly (e.g. by 20dB) in a number of nearby devices, because a jackhammer is being used in a nearby construction site. The present invention, in terms of device synchronization and location of the noise source makes it possible to have an approximate estimate of the location of the main noise source. Consequently, the refinery operator is able to document to the nearby community that this noise excess is coming from a noise source outside the refinery.

Another aspect of the invention relates to the map generation. Indeed, thanks to this system comprising several event measuring/monitoring devices, a large number of devices is deployed in a city, for example, approximately in a grid formation with one device e.g. about 70m away from the next and a quasi "real-time" noise or event pollution is detected, and the extracted features are sent to the application so as to generate a quasi-real-time map. This noise map provides many insights: as an example, one can approximately determine the location of a "loud" noise source by just looking at the distribution of the noise levels in the map.

To this regard, it is further possible to improve the accuracy and the precision of the device and the system by increasing the density of devices in some areas, by increasing the sampling frequency or perform advanced analytics on the measurements. These improvements can increase by 70% the accuracy of a noise map, for example.

More specifically, it is important to address the measuring accuracy of the device. If one just takes the output of the microphone, signals at certain frequencies would not be measured as accurately as those at other frequencies. In other words, the device itself does not have a flat frequency response. Also, the output of the device for a given noise source will depend, to some extent, on the orientation of the device with respect to said source. Therefore, the signal processing also addresses these issues, starting by equalizing the frequency response of the device with the addition of suitable filters for example.

A further application of the present invention can be preventive maintenance. When one places a device of the present invention, very close to a certain piece of equipment such as an electric motor, a conveyor belt in a mine, or the like, it can "learn" the normal noise generated by this particular piece of equipment. Once the noise "signature" of this piece of equipment changes significantly, based on its noise level and its frequency distribution, an alarm signal is generated which will activate the people responsible for the maintenance of this particular piece of equipment.

There are already some preventive maintenance solutions based on vibration, while preventive maintenance based on acoustic noise with LPWA devices solves the technical problem of providing a monitoring device which is not subject to vibration and therefore increases its lifetime. Incidentally, one can also have an accelerometer in the device so as to potentially use vibration as well in combination with noise to improve the reliability of this feature.

In heavy industries, there is often a very strong business case for preventive maintenance solutions, as even an hour of downtime can be extremely costly.

According to another aspect, in order to enhance the reliability of the devices, it is necessary that the hardware modules are protected from the outside such as the meteorological issues, vandalism, or the like. For this reason, according to a preferred embodiment, the device comprises a housing which is watertight, and which can be robustly attached to an urban facility. To this regard, in order to achieve IP67 ingress protection, an embodiment comprises a waterproof, yet breathable, membrane to protect the microphone assembly.

While the embodiments have been described in conjunction with a number of specific features, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. For example, this is particularly the case regarding the different apparatuses which can be used, the type of events which should be measured and monitored.

## Claims

1. Event measuring and/or monitoring device comprising
a sensing unit adapted to sense an event and generate data representative of said event,
a data processing unit adapted to process said data representative of said event so as to generate processed data,
a communication module adapted to send said processed signal to a gateway through LPWA radio technology,
a control module adapted to control the communication module so as to trigger a communication process according to a predetermined protocol,
an embedded energy source adapted to provide energy to the units of said event measuring and/or monitoring device.

2. Event measuring and/or monitoring device according to claim 1, **characterized in that** the sensing module comprises at least one of a microphone, a temperature sensor, an air quality parameters (Co2, N2, CO, etc...) sensing device, a humidity sensor, an accelerometer, a gyroscope and a pressure sensor.

3. Event measuring and/or monitoring device to claim 1 or 2, **characterized in that** the communication module adapted to send said processed signal uses at least one of LoRaWAN, NB-IoT, SigFox, LTE-M and Ingenu RPMA radio technology.

4. Event measuring and/or monitoring device according to any one of claims 1 to 3, **characterized in that** the sensing module functions continuously.

5. Event measuring and/or monitoring device according to any one of claims 1 to 4, **characterized in that** it further comprises a localization module.

6. Event measuring and/or monitoring device according to any one of claims 1 to 5, **characterized in that** the energy source comprises at least one of a battery, piezoelectric transducer and solar cells.

7. Event measuring and/or monitoring device according to any one of claims 1 to 6, **characterized in that** the control module is adapted to control the communication system so as to periodically send the processed signal at predetermined intervals.

8. Event measuring and/or monitoring device according to any one of claims 1 to 7, **characterized in that** it comprises at least one of a volatile memory and a RAM memory adapted to temporarily store statistical information the processed signal data and/or audio waveform before being sent.

9. Event measuring and/or monitoring device according to any one of claims 1 to 8, **characterized in that** the control module is adapted to control the communication system so as to immediately send a processed signal when the sensing module detects an event whose properties meet a predetermined condition.

10. Event measuring and/or monitoring device according to any one of claims 1 to 9, **characterized in that** it is a noise measuring and/or monitoring device comprising at least one microphone such that it is adapted to measure and monitor an environmental noise by detecting a sound.

11. Event measuring and/or monitoring device according to any one of claims 1 to 10, **characterized in that** the processing module is adapted to transform the detected data at the sensing module into a signal representing statistical properties of the event signal being received by the sensing unit.

12. Event measuring and/or monitoring device according to any one of claims 1 to 11, **characterized in that** it further contains at least one memory adapted to temporarily store the processed data said memory being erased at (regular) intervals after transmission of a signal by said communication module.

13. Event measuring and/or monitoring system comprising a plurality of event detection devices according to any one of claims 1 to 12 distributed at predetermined location in an urban environment and at least one gateway adapted to receive signals from said event detection devices.

14. Event measuring and/or monitoring system according to claim 13, **characterized in that** the timing of the event detection devices is synchronized.

15. Event measuring and/or monitoring method carried out by the event detection system according to any one of claims 13 to 14, **characterized in that** it comprises the steps of
continuously sensing an event and generating data representative of said event,
processing said data representative of said event so as to generate processed data,
temporarily storing said processed data and periodically sending said processed data to a remote analytical application.
